# EUROPÄISCHE PATENTANMELDUNG

(11) **EP 1 069 545 A1**
(43) Veröffentlichungstag der Anmeldung: **17.01.2001**
(21) Anmeldenummer: 00440210.3
(22) Anmeldetag: 07.07.2000
(51) Int. Cl.: G08G 1/0968

(54) **Navigationsverfahren und Netzwerkszugangsserver hierfür**

(30) Priorität: 14.07.1999 DE 19932738
(71) Anmelder: ALCATEL, 75008 Paris (FR)
(72) Erfinder: Hägebarth, Frank, 74366 Kirchheim (DE)
(74) Vertreter: Giebel-Roder, Marion

(57) **Zusammenfassung**

Die Erfindung betrifft ein Navigationsverfahren für einen Anrufer, insbesondere einen Mobilfunkteilnehmer, wobei der Anrufer einen IN (Intelligent Network)-Server (2) anruft, seine momentane Position und den Zielort sowie gegebenenfalls die Art der Fortbewegung, insbesondere Fußgänger, öffentliches oder privates Verkehrsmittel, übermittelt und der IN-Server (2) aus diesen Daten und gespeicherten wegespezifischen Daten mindestens einen Weg von der momentanen Position zum Zielort errechnet und mittels optischer und/oder akustischer Signalisierung an das Endgerät des Anrufers übermittelt.

## Beschreibung

Die Erfindung betrifft ein Navigationsverfahren für einen Anrufer, insbesondere einen Mobilfunkteilnehmer.

Navigationssysteme bekannter Art bestehen im allgemeinen aus einer Vorrichtung zur Standortbestimmung, insbesondere satelittengestützt mittels GPS-System (Global Positioning System) und einem Rechner, der in ein Fahrzeug eingebaut ist. Der Rechner besitzt einen Datenspeicher, der eine digitalisierte Straßenkarte einer Stadt oder eines bestimmten Gebietes beinhaltet. Nach manueller Eingabe des Zielortes berechnet ein derartiges System mit Hilfe der Daten der Straßenkarte die günstigste Streckenführung. Verfügt das System über einen zentralen Verkehrsleitrechner können über eine entsprechende Funkverbindung aktuelle Daten, insbesondere bezüglich Verkehrslage, Baustellen und Witterungssituation, in die Wegeberechung einbezogen werden. Das System gibt dem Fahrer akustische oder visuelle Einweisungen. Auf diese Weise dient das Navigationssystem dazu, den Fahrer eines Kraftfahrzeuges durch ein unbekanntes Gebiet zu lotsen. Die benötigte Ausrüstung ist jedoch derart aufwendig und teuer, daß eine weite Verbreitung, insbesondere im privaten Bereich, bisher nicht stattgefunden hat. Die Nutzung außerhalb des Fahrzeuges, beispielsweise als Orientierungshilfe für Fußgänger, Fahrradfahrer, oder Nutzer öffentlicher Verkehrsmittel, ist aufgrund von Gewicht und Größe momentan nicht möglich.

Aus der DE 195 14 133 C2 ist ein Verfahren zur mobilen Anzeige standortentsprechender Informationen sowie Routeninformationen bekannt. Dazu ist ein Handterminal mit GPS-Empfänger und Auswerteschaltung vorgesehen. Die Routenplanung erfolgt über die Kommunikation mit einer Informationszentrale. Auch ein derartiges Handterminal dürfte wegen Größe, Gewicht und Anschaffungskosten nur geringe Akzeptanz bei potentiellen Nutzern erreichen.

Der Erfindung liegt die Aufgabe zugrunde, die oben genannten Nachteile zu beseitigen und ein Navigationsverfahren anzugeben, das äußerst preisgünstig ist und universal zur Nutzung in Kraftfahrzeugen und für Nutzer öffentlicher Verkehrsmittel sowie für Zweiradfahrer und Fußgänger geeignet ist.

Erfindungsgemäß wird die Aufgabe durch die kennzeichnenden Merkmale des Anspruchs 1 gelöst. Der Grundgedanke der Erfindung besteht in der Idee, Mobilfunknetze und IN-Einrichtungen (Intelligent Network) zu nutzen. Eine Positionsbestimmung mittels GPS-Empfänger ist für die meisten Anwendungen entbehrlich, da die momentane Position durch Angabe der Straße und der Hausnummer gegeben ist. Diese Angaben übermittelt der Nutzer per Telefon, vorzugsweise per Mobilfunk an einen IN-Server, wobei der Nutzer nur die Rufnummer des IN-Servers anwählen muß. Im Dialogverfahren erfragt der Server automatisch Zielort sowie gegebenenfalls die Art der Fortbewegung. Aus diesen Daten berechnet der IN-Server mindestens einen Weg von der momentanen Position zum Zielort und übermittelt diesen an das Endgerät des Nutzers. Der vorgeschlagene Weg kann auf dem Display des Endgerätes angezeigt werden und/oder als Sprachausgabe an den Nutzer signalisiert werden. Die Dienstleistung des IN-Servers kann als gebührenpflichtiger Service angeboten werden, um sicherzustellen, daß der Datenbestand stets den aktuellen Gegebenheiten entspricht. Ein Großteil der sehr großen Datenmenge, auf die der Server Zugriff haben muß, kann von bestehenden Systemen übernommen werden. Beispielsweise sind von sehr vielen Städten und auch ländlichen Regionen digitalisierte Straßenkarten vorhanden. Um aktuelle Fahrplandaten liniengebundener Fahrzeuge anzubieten, könnte der Server beispielsweise auf die in der Zentrale eines Verkehrsbetriebes ohnehin vorhandenen Daten zurückgreifen. Diese Daten umfassen häufig auch ein System zur dynamischen Fahrgastinformation (DFI-System) zur Ansteuerung von Anzeigetafeln an Haltestellen hinsichtlich der zu erwartenden Ankunft und/oder Abfahrtszeit des Fahrzeugs des öffentlichen PersonenNahverkehrs (ÖPNV). Auf diese Weise kann der IN-Server nicht nur Fahrplandaten, sondern auch aktuelle Daten zu tatsächlichen Abfahrtszeiten zur Verfügung stellen.

Gemäß Anspruch 2 wird der errechnete Weg vollständig und/oder abschnittweise an den Interessenten übermittelt. Beispielsweise könnte prinzipiell zunächst der vollständige Weg von der momentanen Position zum Zielort ausgegeben werden, wobei die Abschnitteinteilung bereits angedeutet werden sollte. Hernach werden die Abschnitte des vollständigen Weges detaillierter ausgegeben.

Vorzugsweise erfolgt die Einteilung der Abschnitte mit den Merkmalen des Anspruchs 3. Bei einer Wegempfehlung unter Nutzung öffentlicher Verkehrsmittel können die Abschnitte auf einfache Weise aus den Distanzen zwischen Einsteige- Umsteige- und Aussteigehaltestellen zusammengesetzt werden. Als topographische Merkmale für Fußgänger, Radfahrer und Motorisierte kommen zum Beispiel markante Gebäude an Kreuzungen und Abbiegungen in Frage, an denen gemäß dem berechneten Weg die Richtung zu ändern ist.

Neben der Charakterisierung des Weges anhand von Richtungs- und Ortsangaben, wird gemäß Anspruch 4 auch die Weglänge beziehungsweise die Länge einzelner Wegabschnitte übermittelt. Das kann durch Entfernungsangaben, aber auch durch Zeitangaben erfolgen.

Anspruch 5 charakterisiert eine einfache Möglichkeit, dem Server zu signalisieren, daß nunmehr die Daten des nächsten Abschnittes benötigt werden.

Darüber hinaus bietet eine in Anspruch 6 angegebene vorteilhafte Weiterbildung des Verfahrens weiteren Komfort und Service für den Benutzer. Um die Verbindung aus Kostengründen nicht während des Beschreitens oder Befahrens des gesamten Weges aufrechterhalten zu müssen, sollte eine Art Stand-by-Funktion angeboten werden, durch welche die Informationen jederzeit erneut abgerufen werden können, ohne eine erneute Navigationsanfrage stellen zu müssen.

Anspruch 7 betrifft den Aufbau eines für das Verfahren geeigneten IN-Servers. Im wesentlichen sind Kommunikationsmittel, Speichermittel und Berechnungsmittel vorgesehen. Dabei sind die Kommunikationsmittel gemäß der Ansprüche 8 und 9 mit einem dialogfähigen Sprachmenü zur Auswertung der Navigationsanfrage des Interessenten und mit einer Vorrichtung zur automatischen Ansage des berechneten Weges als Ausgabemittel ausgestattet.

Eine vorteilhafte Ausführungsform gemäß Anspruch 10 gestattet eine Ausweitung des Informationsangebotes für den Interessenten, beispielsweise bezüglich der aktuellen Stausituation, voraussichtlicher Abweichungen vom Fahrplan des öffentlichen Personennahverkehrs und der zu erwartenden Witterung. Denkbar ist auch ein erweitertes Informationsangebot im Hinblick auf Hotelreservierung, in der Nähe des Zielortes befindlicher Gastronomiemöglichkeiten und Parkleitsysteme und sehr viel mehr. Darüber hinaus könnte Werbeeinspielung angeboten werden, wobei dann über die Werbeeinnahmen eine Gebührenreduzierung für den Nutzer des Navigationssystems erfolgen sollte.

Nachfolgend wird die Erfindung anhand eines schematisch dargestellten Ausführungsbeispiels näher erläutert.

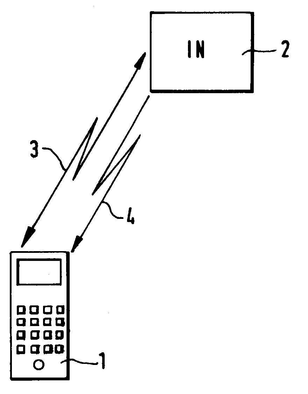

Die einzige Figur zeigt ein Mobilfunkgerät 1 und einen IN-Server 2, die über einen Dialogmodus 3 zur Spezifizierung einer Navigationsanfrage und einen Ausgabemodus 4 zur Übermittlung mindestens eines vom IN-Server 2 berechneten Weges an den Mobilfunkteilnehmer in Verbindung stehen. Der Nutzer baut durch Wahl einer bestimmten Rufnummer die Verbindung zum IN-Server 2 auf. Im Dialogmodus 3 werden momentane Position, Zielort und gewünschtes Verkehrsmittel an den IN-Server 2 übermittelt, welcher daraus unter Zuhilfenahme gespeicherter Kartendaten den optimalen Weg berechnet. Dieser Weg wird dem Nutzer abschnittsweise mittels automatischer Ansage über den Ansagemodus 4 mitgeteilt, wobei der Nutzer durch Betätigung einer bestimmten Taste die Weginformation zu dem jeweils nächsten Abschnitt abruft.

Die Erfindung beschränkt sich nicht auf das vorstehend angegebene Ausführungsbeispiel. Vielmehr ist eine Anzahl von Varianten möglich, welche auch bei grundsätzlich anders gearteter Ausführung von den Merkmalen der Erfindung Gebrauch machen.

## Patentansprüche

1. Navigationsverfahren für einen Anrufer, insbesondere einen Mobilfunkteilnehmer, dadurch gekennzeichnet, daß der Anrufer einen IN (Intelligent Network)-Server (2) anruft, seine momentane Position und den Zielort sowie gegebenenfalls die Art der Fortbewegung, insbesondere Fußgänger, öffentliches oder privates Verkehrsmittel, übermittelt und der IN-Server (2) aus diesen Daten und gespeicherten wegespezifischen Daten mindestens einen Weg von der momentanen Position zum Zielort errechnet und mittels optischer und/oder akustischer Signalisierung an das Endgerät des Anrufers übermittelt.

2. Navigationsverfahren nach Anspruch 1, dadurch gekennzeichnet, daß der errechnete Weg vollständig und/oder abschnittsweise übermittelt wird.

3. Navigationsverfahren nach Anspruch 2, dadurch gekennzeichnet, daß der IN-Server (2) die Länge der Abschnitte in Abhängigkeit vom gewählten Verkehrsmittel und/oder von markanten topographischen Merkmalen festlegt.

4. Navigationsverfahren nach einem der vorangehenden Ansprüche, dadurch gekennzeichnet, daß zusätzlich die Weglänge übermittelt wird.

5. Navigationsverfahren nach einem der vorangehenden Ansprüche, dadurch gekennzeichnet, daß der Anrufer das Erreichen des Endes eines Abschnittes durch Wahl einer bestimmten Taste(nkombination) signalisiert.

6. Navigationsverfahren nach einem der vorangehenden Ansprüche, dadurch gekennzeichnet, daß der Anrufer durch Wahl einer bestimmten Taste(nkombination) in ein Menü für Zusatzfunktionen, insbesondere vorübergehende Unterbrechung der Verbindung zum IN-Server (2), Wiederholung einer bestimmten Ansage, Anforderung einer Zusammenfassung des vollständigen Weges, gelangt.

7. IN-Server (2) für ein Navigationsverfahren nach einem der vorangehenden Ansprüche, gekennzeichnet durch
- Empfangsmittel zum Empfang von Navigationsanfragen durch den Anrufer,
- Speichermittel zum Speichern wegespezifischer Daten,
- Berechnungsmittel zum Ermitteln mindestens eines Weges aus den Daten der Navigationsanfrage und den wegespezifischen Daten und
- Ausgabemittel zur Übermittlung des Weges an das Endgerät des Anrufers.

8. IN-Server (2) nach Anspruch 7, dadurch gekennzeichnet, daß die Empfangsmittel ein dialogfähiges Sprachmenü aufweisen.

9. IN-Server (2) nach Anspruch 7 oder 8, dadurch gekennzeichnet, daß die Ausgabemittel eine Vorrichtung zur automatischen Ansage des berechneten Weges aufweisen.

10. IN-Server (2) nach einem der Ansprüche 7-9, dadurch gekennzeichnet, daß die Speichermittel einen Speicherbereich zum überschreibbaren Speichern jeweils aktueller, sich verändernder routenspezifischer Daten, insbesondere bezüglich Verkehrslage, Fahrplankonformität und Witterung, umfassen.
